Europäisches Patentamt

European Patent Office

Office européen des brevets

(11) Publication number: **0 448 769 A1**

# EUROPEAN PATENT APPLICATION

(21) Application number: **90112875.1**

(51) Int. Cl.5: **F01N 7/18, F16L 27/10**

(22) Date of filing: **05.07.90**

(30) Priority: **27.03.90 US 499990**

(43) Date of publication of application:
**02.10.91 Bulletin 91/40**

(84) Designated Contracting States:
**DE FR GB IT NL**

(71) Applicant: **Anamet Inc.**
**698 South Main Street**
**Waterbury Connecticut 06725(US)**

(72) Inventor: **Hoube, Allen G.**
**35 Pine Street**
**Watertown Connecticut 06765(US)**

(74) Representative: **Glawe, Delfs, Moll & Partner**
**Patentanwälte**
**Postfach 26 01 62 Liebherrstrasse 20**
**W-8000 München 26(DE)**

(54) **Noise suppressing flexible exhaust coupling.**

(57) A coupling unit (10) mountable in the exhaust train of an engine immediately downstream of the exhaust manifold provides a significant reduction in engine noise levels. The coupling unit does not include a rigid liner but comprises a flexible tubular coupling (10) consisting essentially of inlet and outlet collar portions (18, 20) and an intermediate dual wrapped flexible central conduit portion (16). The flexible dual wrapped central portion (16) consists of a longitudinally undulating, pressure-carrying conduit member (26) and a concentric, vibration-dampening helicoidal covering (34). The flexible coupling (10) has a length to inside diameter ratio in the range of 1:1 to 8:1, and permits limited multi-axis movement of one of the collar portions (18, 20) relative to the other. The flexible metal coupling (10) is effective in reducing noise levels at engine speeds in the range of from idle speed up to about 5,000 rpm.

FIG. 2

EP 0 448 769 A1

EP 0 448 769 A1

## Background and Summary of the Invention

The present invention relates generally to a flexible coupling for the exhaust system of a motor vehicle and is more particularly concerned with a new and improved coupling unit that significantly suppresses engine noise levels.

Although bellows assemblies similar in design to the invention have been employed in exhaust systems cross over pipes that connect the two manifolds of V-6 or V-8 engines, such bellows assemblies typically have employed rigid exhaust pipe liners fully overcovered by flexible components. The liners provided the primary structural support for the coupling while the corrugated covering was effective to absorb axial movement resulting from pipe growth at elevated temperatures and give the installation a limited degree of flexibility. In some instances the corrugated covering was covered by an overbraid, and in other instances a strip wound casing was provided between the braiding and the corrugated bellows. Such bellows assemblies were not used as a means of suppressing engine noise levels.

In accordance with the present invention, it has been found that an unlined flexible coupling, mounted in the exhaust train between the exhaust manifold and the catalytic converter, will provide significant and unexpected advantages. Specially, it provides an appreciable and advantageous reduction in interior vehicle noise levels. This advantage is achieved while providing the requisite exhaust gas confinement and complete support for the catalytic converter while, at the same time, permitting limited multi-axis movement of the catalytic converter in all planes relative to the manifold. This is achieved in the unlined structure of the present invention, by providing a coupling with a more fully flexible central body portion having a vibration dampening component and a pressure carrying component, coupled with appropriate gas tight integrity and structural stability.

Other advantages and features will be in part obvious and in part pointed out more in detail hereinafter.

These and related objects are achieved in accordance with the present invention by providing an engine noise suppressing and manifold coupling unit mountable in the exhaust train of an engine immediately downstream of the exhaust manifold. The coupling unit does not include a rigid liner but comprises a flexible tubular coupling consisting essentially of inlet and outlet collar portions and an intermediate dual wrapped flexible central conduit portion. The flexible dual wrapped central portion consists of a longitudinally-undulating, pressure-carrying conduit member and a concentric, vibration-dampening helicoidal covering. The flexible coupling has a length to inside diameter ratio in the range of 1:1 to 8:1, and permits limited multi-axis movement of one of the collar portions relative to the other. The flexible metal coupling is effective in reducing noise levels at engine speeds in the range of from idle speed up to about 5,000 rpm.

A better understanding of the invention will be obtained from the following detailed description and the accompanying drawing, which set forth an illustrative embodiment indicative of the way in which the principles of the invention are employed.

## Brief Description of the Drawings

In the drawing:
Fig. 1 is a schematic view of a vehicle exhaust system showing the flexible coupling unit of the present invention installed between a manifold and a catalytic converter;
Fig. 2 is an enlarged elevational view, partially broken away and partially in section, of the coupler unit of Fig. 1; and
Fig. 3 is a side elevational view, partially broken away and partially in section, of another embodiment of the coupler unit of the present invention.

## Description of a Preferred Embodiment

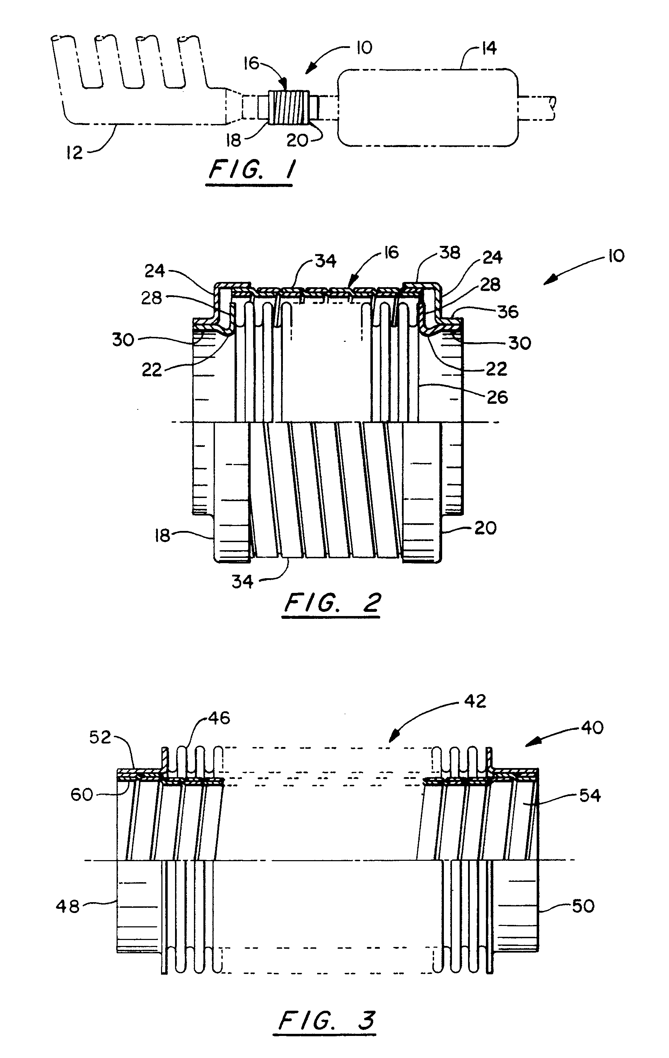

Referring now to the drawing in greater detail wherein like reference numerals indicate like parts throughout the several figures, the present invention is shown as embodied within a flexible metal coupler unit 10 directly interconnecting an exhaust manifold 12 with a catalytic converter 14 of a vehicle exhaust system. The flexible coupler unit 10 is fabricated from metal components suited to withstand the temperature and environmental conditions of the vehicle's exhaust system and consists essentially of an unlined dual wrapped central or main body portion, generally designated 16, extending between and integrally connected to inlet and outlet collar portions 18, 20 positioned at opposite ends thereof. The collar portions 18, 20 are substantially identical and each preferably consists of a heavy wall tubular rim member 22 that is fusion welded to the main body portion 16 to provide sturdy mounting supports and at the same

2

time assure the necessary gas tight characteristics of the entire unit. As shown in Fig. 2 the collar portions also include a reducing outer sleeve 24 overlying the end of the central body portion 16 and the tubular rim member 22.

The central conduit portion 16 is dual wrapped to provide a vibration-dampening component and a pressure-carrying component concentrically assembled and extending along the full distance between the collar portions 18, 20. Each component is highly flexible and permits not only axial extensibility but also multi-directional radial movement of one end of the coupler relative to the other. As shown in Fig. 2 the inner component is a corrugated conduit 26 of undulating or bellows configuration or style. It provides the primary pressure-carrying portion of the dual wrap assembly. The number of undulations or convolutions will vary with the length, diameter and thickness of the flexible metal conduit; however, typically about 4 to 5 undulations per inch of length has been found to provide excellent results. The length of the main body portion 16 may vary, but it has been found that excellent results are achieved at a length of only about 2.5 to 4 inches. As mentioned hereinbefore, in order to assure firm and secure mounting of the conduit, the ends of the corrugated conduit 26 are secured, such as by arc welding or the like, to a radially outwardly extending flange 28 of the reinforcing tubular rim 22. The inside diameter of the rim 22 preferably is substantially the same as that of the bellows 26 with the neck portion 30 of the tube 22 extending for a sufficient axial distance to facilitate attachment to either the manifold 12 or the catalytic converter 14. The inside diameter of the tube 22 may vary considerably but conventionally falls within the range of about 1.5 to 3 inches. Accordingly, the length to inside diameter ratio is typically greater than 1:1 and may extend up to about 8:1 with the preferred ratio for the embodiment of Fig. 2 falling in the range of 1:1 to 2:1.

The second flexible component of the dual wrapped main body portion 16 is concentric and coextensive with the corrugated conduit 26. The second component imparts a vibration dampening quality to the assembly and, as shown in Fig. 2, preferably takes the form of a flat, friction-retaining, strip-wound outer covering or casing 34, that traverses the entire central portion 16 of the coupling structure. The ends of the strip-wound casing 34 are not secured directly to the bellows 26 but instead are secured thereto through the stepped reducing sleeve 24. The reduced diameter portion 36 of sleeve 24 is secured to the outer surface of the rim's neck portion 30 while the large diameter portion 38 of sleeve 24 overlies the end of strip wound casing 34 and is secured thereto by arc welding or the like.

In order to assess the noise suppressing character of the coupling unit of the present invention, a unit substantially as depicted in Fig. 2, was assembled in a 1988 Dodge Daytona vehicle and the noise levels were measured at the driver's right ear as the speed of the engine increased in first gear from an idle condition up to about 3,000 revolutions per minute.

In order to provide a control, a standard vehicle of the same make, model and year, was tested without altering the exhaust system of the vehicle. In the control vehicle the catalytic converter is mounted close to the manifold and is attached with a conventional spring loaded ball joint. The first exhaust pipe hanger is located at the rear of the floor pan so as to place all of the catalytic converter load on the ball joint and manifold.

In the vehicle provided with the coupler of the present invention the spring loaded ball joint was replaced with a three bolt plate flange and the flexible coupling unit was mounted between the flange and the catalytic converter.

Noise level readings were taken inside the vehicle at the driver's right ear, with the vehicle in the first drive gear and with the front wheels freely rotating off the ground. The results of those measurements are shown in Table 1.

## TABLE I

### Noise Level (decibels)

| Engine speed | Idle | 1500 | 1800 | 2000 | 2500 | 2800 |
|---|---|---|---|---|---|---|
| Control Vehicle | 55 | 62 | 61 | 61 | 65 | 65 |
| Vehicle with Coupler | 51 | 51 | 53 | 54 | 59 | 62 |
| Difference | 4 | 11 | 8 | 7 | 6 | 3 |

It was found that at engine speed above 3,000 rpm, no significant difference was noted between the vehicle with the standard exhaust system and the vehicle with the coupling unit of the present invention. However, it should be noted that a decibel reduction level of 6 to 11 decibels is considered a significant reduction in noise level. As noted, as the engine speed climbs above 3,000 rpm, the noise level reduction drops to a level below that considered to be significant. However, as shown in Table I, a reduction in noise level is achieved from engine idle speed up to about 3,000 rpm.

The coupler of the present invention was also installed in a 1989 Eagle Premier and a 1990 Chevrolet Cavalier. Noise level tests on the Eagle Premier showed a similar reduction over its full rpm range up to 5,000 rpm while the same results were found with the Cavalier at engine speeds of 1,000 to 3,000 rpm.

A modified version of the coupling unit of the present invention is shown in Fig. 3 wherein the relative positions of the two flexible components of the main body portion are switched so that the vibration dampening strip-wound helicoid covering is located within the interior of the corrugated bellows. In this configuration the coupling unit 40 is typically of greater length, with the main central portion 42 thereof reaching a length of about 6 to 7 inches and a length to inside diameter ratio falling in the preferred range of about 3:1 to 5:1.

As shown in Fig. 3, the corrugated conduit 46 is secured on its ends to a pair of collar portions 48, 50, each consisting of only a heavy wall tubular rim 52. The interior strip-wound covering 54 extends beyond the ends of conduit 46 so that it is coextensive with rim 52 and is secured to the interior cylindrical surface 60 of rim 52 to provide the desired reinforcement at the collars.

As will be noted, due to the bellows configuration, the outside diameter of both embodiments of the coupling unit is typically about 0.5 to 1.5 inches greater than the inside diameter of the unit in order to accommodate the folds of the bellows configuration.

As will be apparent to persons skilled in the art, various modifications, adaptations and variations can be made without departing from the teachings of the present invention.

## Claims

1. An engine noise suppressing and manifold coupling unit mountable in the exhaust train of an engine immediately downstream of the exhaust manifold comprising a flexible tubular coupling consisting essentially of inlet and outlet collar portions and an intermediate dual wrap central portion, said intermediate dual wrap central portion being unlined and consisting of a longitudinally undulating pressure carrying conduit member and a concentric vibration dampening covering, said unlined central portion permitting limited multi-axis movement of one of said collar portions relative to the other and effecting an interior vehicle noise level reduction.

2. The coupling unit of claim 1 wherein said pressure carrying conduit is a corrugated bellows member.

3. The coupling unit of claim 1 wherein said vibration dampening covering is a strip-wound casing.

4. The coupling unit of claim 1 wherein said vibration dampening covering is mounted inside said undulating conduit member.

5. The coupling unit of claim 1 wherein said vibration dampening covering is mounted outside said undulating conduit member.

6. The coupling unit of claim 1 wherein said collar portions interconnect said conduit member and covering.

7. The coupling unit of claim 1 wherein said collar portions are reinforced members.

8. The coupling unit of claim 1 wherein the length of the unit is greater than about 1.5 inches and less than about 10 inches.

9. The coupling unit of claim 1 wherein the length to inside diameter ratio falls within the range of about 1:1 to 8:1.

10. The coupling unit of claim 1 wherein said vibration dampening covering is mounted outside said undulating conduit member and the length to inside diameter ratio is in the range of about 1:1 to 2:1.

11. The coupling unit of claim 1 wherein said vibration dampening covering is mounted inside said undulating conduit member and the length to inside diameter ratio is in the range of about 3:1 to 5:1.

_FIG. 1_

_FIG. 2_

_FIG. 3_

# EUROPEAN SEARCH REPORT

**EP 90 11 2875**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,A | FR-A-2 310 071  (LAMES S.P.A.)<br>* page 1, line 1 - page 3, line 11; figures 1, 2 *<br>— — — | 1-4,11 | F 01 N 7/18<br>F 16 L 27/10 |
| X,A | EP-A-0 297 861  (TITEFLEX CORPORATION)<br>* page 1, lines 25 - 44 * * page 4, line 51 - page 8, line 32; figures 1, 7 *<br>— — — | 1,2,5,6,10 | |
| X,A | EP-A-0 274 144  (ALFA LANCIA INDUSTRIALE)<br>* column 3, line 8 - column 4, line 1; figures 1-4 *<br>— — — | 1,2,5,10 | |
| A | US-A-4 315 558  (KATAYAMA)<br>* the whole document *<br>— — — | 1,2,5,6,10 | |
| A | PATENT ABSTRACTS OF JAPAN vol. 8, no. 274 (M-345)(1711) 14 December 1984,<br>& JP-A-59 145321 (TOYOTA JIDOSHA) 20 August 1984,<br>* the whole document *<br>— — — | 1,2,5,10 | |
| A | FR-A-2 324 866  (SOCIETE ANONYME TUBEST)<br>* page 2, line 22 - page 3, line 13; figures 1, 2 *<br>— — — | 1,2,5,10 | |
| A | DE-A-3 702 243  (WITZENMANN)<br>* column 2, line 16 - column 6, line 57; figures 1-8 *<br>— — — | 1,3-5,<br>10-11 | **TECHNICAL FIELDS SEARCHED (Int. Cl.5)**<br><br>F 01 N<br>F 16 L |
| A | EP-A-0 300 174  (WITZENMANN)<br>— — — | | |
| A | US-A-2 867 242  (HARRIS)<br>— — — | | |
| A | GB-A-2 076 491  (NUOVO PIGNONE S.P.A.)<br>— — — — — | | |

The present search report has been drawn up for all claims

| Place of search | Date of completion of search | Examiner |
|---|---|---|
| The Hague | 25 June 91 | FRIDEN C.M. |